# FASCICULE DE BREVET EUROPEEN

(11) **EP 2 271 835 B1**
(45) Date de publication et mention de la délivrance du brevet: **03.05.2017**
(21) Numéro de dépôt: 09738307.9
(22) Date de dépôt: 31.03.2009
(51) Int. Cl.: F02K 1/34

(54) **DISPOSITIF À JETS SECONDAIRES DE RÉDUCTION DU BRUIT GÉNÉRÉ PAR UN RÉACTEUR D'AÉRONEF**
VORRICHTUNG MIT SEKUNDÄRDÜSEN ZUR MINDERUNG DES DURCH EIN FLUGZEUGTRIEBWERK ERZEUGTEN LÄRMS
DEVICE WITH SECONDARY JETS REDUCING THE NOISE GENERATED BY AN AIRCRAFT JET ENGINE

(30) Priorité: 31.03.2008 FR 0852123
(43) Date de publication de la demande: 12.01.2011
(73) Titulaire: Airbus Operations, 31060 Toulouse (FR); Centre National de la Recherche Scientifique (C.N.R.S.), 75016 Paris (FR); Université De Poitiers, 86034 Poitiers Cedex (FR)
(72) Inventeur: BONNET, Jean-Paul, F-86000 Poitiers (FR); DELVILLE, Joël, F-86000 Poitiers (FR); JORDAN, Peter, F-79120 Rom (FR); STREKOWSKI, François, 37520 LA RICHE (FR)
(74) Mandataire: Santarelli
(86) Numéro de dépôt international: PCT/FR2009/000376
(87) Numéro de publication internationale: WO 2009/133273

(56) Documents cités:
- EP-A- 1 580 418
- EP-A2- 2 118 475
- WO-A-02/29232
- WO-A2-2008/100712
- FR-A- 1 195 859
- FR-A- 2 872 549

## Description

L'invention est relative à un réacteur d'aéronef.

De façon connue, un réacteur d'aéronef se présente sous la forme d'une nacelle au centre de laquelle est positionnée une turbomachine.

Cette nacelle est destinée à être montée sous la voilure d'un aéronef par l'intermédiaire d'un mât de réacteur.

La turbomachine est composée d'un générateur de gaz qui entraine une soufflante montée sur l'arbre du générateur de gaz, en amont de ce dernier suivant la direction longitudinale de la nacelle de réacteur.

Le flux d'air qui traverse longitudinalement la nacelle pénètre en partie dans le générateur de gaz et participe à la combustion.

Ce flux est appelé flux primaire et est éjecté en sortie du générateur.

La partie du flux d'air entrant dans la nacelle et qui ne traverse pas le générateur de gaz est entraînée par la soufflante.

Ce flux, appelé flux secondaire, s'écoule dans un passage annulaire, de façon concentrique par rapport au flux primaire. Ce passage est formé entre une paroi longitudinale externe (paroi de nacelle) et une paroi longitudinale interne entourant le générateur de gaz.

Le flux secondaire est éjecté de la nacelle à l'extrémité aval de la paroi externe de celle-ci suivant la direction sensiblement longitudinale du réacteur.

La paroi interne entourant le générateur du gaz définit également avec une pièce longitudinale interne un passage annulaire par lequel s'écoule le flux primaire.

Ce flux est éjecté à l'extrémité aval de la paroi interne qui entoure le générateur de gaz.

Lors des phases de décollage, le flux de gaz qui est éjecté (flux primaire et secondaire) adopte des vitesses très élevées. À ces vitesses, la rencontre du flux éjecté avec l'air environnant, de même que la rencontre du flux primaire et du flux secondaire génèrent un bruit important.

On connaît d'après la demande internationale WO2002/013243 un dispositif fluidique de réduction du bruit généré par un réacteur d'aéronef.

Ce dispositif comporte plusieurs paires de conduits débouchant en sortie d'une tuyère du réacteur qui éjecte un jet propulsif et qui sont répartis à la périphérie de cette tuyère.

Les conduits de chaque paire éjectent chacun un jet d'air et sont disposés de façon convergente l'un par rapport à l'autre pour générer en sortie un triangle d'interaction des jets d'air.

L'angle de convergence des conduits est compris entre 40 et 70°.

Ce dispositif est satisfaisant pour de petites dimensions de tuyères.

Cependant, lorsque les diamètres des tuyères adoptent des valeurs relativement élevées, par exemple de l'ordre du mètre, le dispositif précité perd de son efficacité.

Les jets de fluide issus des conduits convergents ne peuvent en effet interagir avec l'intégralité du jet propulsif éjecté par la tuyère. De ce fait, une partie de celui-ci rencontre l'écoulement périphérique externe d'air, générant ainsi du bruit. On connaît d'après le document FR1195859 un dispositif de réduction du bruit généré para un réacteur d'aéronef. Il existe donc un besoin de réduire le bruit provoqué par l'éjection du ou des flux de gaz en sortie de la nacelle de réacteur d'un aéronef, notamment lorsque les dimensions du réacteur sont importantes.

À cet effet, l'invention a pour objet un réacteur d'aéronef selon la revendication 1. Les jets de fluide secondaires associés à chaque paire de jets de fluide primaires convergents contribuent à former une zone fluidique quasi-imperméable au flux de gaz éjecté.

En orientant les conduits secondaires ou leur orifice de sortie vers l'intérieur du triangle fluidique formé par les jets primaires on comble, avec les jets secondaires ainsi dirigés, la zone interne du triangle qui n'est pas balayée par les jets primaires.

Le flux de gaz éjecté est ainsi canalisé vers l'aval par ces jets secondaires et peut interagir avec les jets primaires convergents en donnant naissance à des tourbillons.

Ces tourbillons se propagent vers l'aval le long du flux (dans la direction longitudinale du réacteur) et contribuent à réduire le bruit.

Selon un premier mode de réalisation qui ne fait pas partie de l'invention, au moins un conduit secondaire est agencé entre les deux conduits primaires de chaque paire, de façon alignée avec la hauteur du triangle formé par les jets issus de ces derniers.

Ainsi, un jet secondaire central qui est éjecté d'un conduit secondaire central parcourt la zone intérieure du triangle formé par les jets primaires convergents, empêchant ainsi le flux de gaz éjecté de s'échapper radialement.

Selon un deuxième mode de réalisation qui ne fait pas partie de l'invention, au moins un conduit secondaire est agencé de façon centrale entre les deux conduits primaires convergents et est apte à éjecter un jet de fluide en forme de nappe.

Ce jet sensiblement dirigé au milieu des jets primaires convergents crée, entre ces derniers, une barrière fluidique relativement large qui fait office de déflecteur pour le jet de gaz propulsif.

De ce fait, il est possible d'éloigner l'un de l'autre les deux conduits primaires d'une même paire.

Ceci permet d'équiper une tuyère de réacteur avec un dispositif fluidique d'atténuation acoustique en utilisant moins de conduits qu'auparavant.

En outre, l'invention permet d'équiper des tuyères de réacteur de grands diamètres de façon acoustiquement efficace, même si les deux conduits primaires de chaque paire ménagent entre eux un espace de dimensions relativement grandes.

Selon une caractéristique, ledit au moins un conduit secondaire est apte à éjecter le jet de fluide en forme de nappe par un orifice de sortie qui est orienté parallèlement à la hauteur du triangle formé par les jets primaires. Selon l'invention, le réacteur comporte, associés à chaque conduit primaire, plusieurs conduits secondaires disposés côte à côte et orientés parallèlement au conduit primaire associé.

Plusieurs jets secondaires parallèles issus des conduits secondaires s'associent aux jets primaires convergents pour couvrir la zone interne du triangle formé par ces derniers.

Les deux types de jets ainsi réunis pour chaque paire de conduits primaires forment, en quelque sorte, des nappes de fluide convergentes qui forment un écran fluidique vis-à-vis du flux de gaz éjecté.

Ce mode de réalisation permet également de « fermer » la zone située entre les jets de fluide primaires convergents, à la périphérie du flux de gaz éjecté et qui, sur les réacteurs de grandes tailles, était perméable au flux de gaz avec les deux seuls jets primaires convergents.

Dans ce mode, le diamètre de l'orifice de sortie des conduits primaires et secondaires peut être identique ou bien varier.

Par exemple, le diamètre des conduits parallèles va en diminuant au fur et à mesure que le conduit secondaire considéré s'éloigne du conduit primaire associé.

Le nombre des conduits secondaires est par exemple choisi en fonction du diamètre de l'extrémité aval de la paroi par laquelle est éjecté le flux de gaz.

Selon une caractéristique, les conduits primaires convergent l'un vers l'autre suivant un angle de convergence compris entre 40 et 70° suivant une vue en projection dans un plan perpendiculaire à un plan transversal.

Cet angle de forte convergence contribue à l'efficacité de l'invention.

On notera que les conduits secondaires associés aux deux conduits primaires convergents sont également disposés suivant le même angle de convergence.

Selon une autre caractéristique, les conduits sont inclinés en direction de l'axe longitudinal suivant un angle de pénétration compris entre 8 et 60°.

Cet angle de pénétration contribue également à l'efficacité de l'invention.

Les angles d'inclinaison (angles de pénétration) sur l'axe longitudinal du réacteur des différents conduits primaires et secondaires associés peuvent varier au lieu d'adopter une seule valeur : les différentes paires de conduits peuvent ainsi être décalées les unes par rapport aux autres ou être montées en quinconce.

Par exemple, les différents conduits peuvent être orientés de façon à ce que les trajectoires des jets produits ne se croisent pas, limitant ainsi les effets couplés parasites.

Selon une caractéristique, les conduits primaires et/ou secondaires associés sont intégrés dans la paroi, ce qui permet de réduire l'encombrement.

Selon une caractéristique, l'extrémité aval de la paroi comporte une pluralité de chevrons répartis à la périphérie de celle-ci afin de former un dispositif mécanique d'atténuation acoustique.

Les chevrons interagissent avec le flux de gaz issu de l'extrémité aval où ils sont disposés, donnant ainsi naissance à des tourbillons qui se propagent le long du flux (dans la direction longitudinale du réacteur) et contribuent à réduire le bruit.

Lorsque les conduits d'éjection de fluide sont agencés en relation avec l'extrémité aval de la paroi, les chevrons peuvent être aménagés au niveau de cette même extrémité pour renforcer l'effet d'atténuation du bruit généré par le réacteur.

À titre de variante, les chevrons peuvent être aménagés au niveau d'une autre extrémité aval de paroi qui entoure la sortie d'un autre flux éjecté du réacteur.

Selon une autre variante, les conduits d'éjection de fluide et les chevrons peuvent être intégrés à la même extrémité aval de paroi, tandis qu'une autre extrémité aval dé paroi entourant la sortie d'un autre flux éjecté du réacteur peut également être équipée de chevrons seuls ou de conduits seuls ou bien de chevrons en coopération avec des conduits.

Selon une caractéristique, les conduits sont associés aux chevrons qui confèrent à l'extrémité aval de la paroi une forme dentelée comprenant une succession de sommets et de creux.

Le jet fluidique sortant de chaque conduit s'associe au tourbillon longitudinal généré au niveau du chevron associé et renforce ainsi son action antibruit.

L'association des jets de fluide aux chevrons permet :
- d'étendre l'impact spatial des chevrons, c'est-à-dire à effet identique, d'avoir des chevrons plus courts (moins pénalisants en croisière) ou à taille de chevron identique, d'en augmenter l'efficacité,
- de créer des effets spatiaux nouveaux dans la mesure où les jets interagissent avec le jet propulsif en différentes positions à partir du bord de fuite ; ceci permet donc d'avoir différents gradients de pression, ce qui peut être favorable à l'action des jets en amplifiant par exemple leur pénétration.

Selon une caractéristique, chaque chevron comprenant une partie inclinée reliant le sommet à un creux adjacent, les conduits primaires sont conformés en relation avec les chevrons de façon à ce que chaque jet de fluide soit éjecté parallèlement à la direction d'inclinaison d'une des parties inclinées du chevron correspondant.

Chaque conduit primaire est par exemple agencé le long d'une de ces parties inclinées d'un chevron et son orifice de sortie est disposé au sommet du chevron, tandis que le conduit secondaire central est aligné suivant la médiane passant par le sommet.

Ainsi agencés, les conduits produisent des jets qui prolongent en quelque sorte les effets des chevrons en leur donnant une incidence. On réalise ainsi, en quelque sorte, des chevrons très dissymétriques, et ceci de façon fluide, c'est-à-dire sans pénaliser les performances aérodynamiques en vol de croisière.

L'invention a également pour objet un aéronef comprenant au moins un réacteur conforme au bref exposé mentionné ci-dessus.

D'autres caractéristiques et avantages apparaîtront au cours de la description qui va suivre, donnée uniquement à titre d'exemple non limitatif et faite en référence aux dessins annexés, sur lesquels :
- la figure 1 est une vue générale schématique en coupe longitudinale d'un réacteur d'aéronef dans laquelle seule la partie supérieure du capot de soufflante a été enlevée;
- la figure 2a est une vue schématique en perspective d'une extrémité aval de paroi de nacelle équipée selon un premier mode de réalisation qui ne fait pas partie de l'invention ;
- la figure 2b est une vue schématique partielle agrandie en perspective vue de dessus de l'extrémité aval de la figure 2a ;
- la figure 2c est une vue schématique partielle agrandie en vue de dessus des trois conduits représentés à la figure 2b ;
- les figures 2d, 2e et 2f sont des vues schématiques partielles suivant A montrant l'inclinaison sur l'axe des conduits ;
- la figure 3a est une vue schématique en perspective d'une extrémité aval de paroi de nacelle équipée selon un deuxième mode de qui ne fait pas partie de l'invention ;
- la figure 3b est une vue schématique partielle agrandie en vue de dessus de l'extrémité aval de la figure 3a ;
- la figure 4a est une vue schématique en perspective d'une extrémité aval de paroi de nacelle équipée selon l'invention ;
- la figure 4b est une vue schématique partielle agrandie en vue de dessus de l'extrémité aval de la figure 4a ;
- la figure 4c illustre schématiquement l'installation d'un conduit dans la paroi de la nacelle ;
- la figure 4d illustre de façon schématique l'association de conduits et de chevrons.

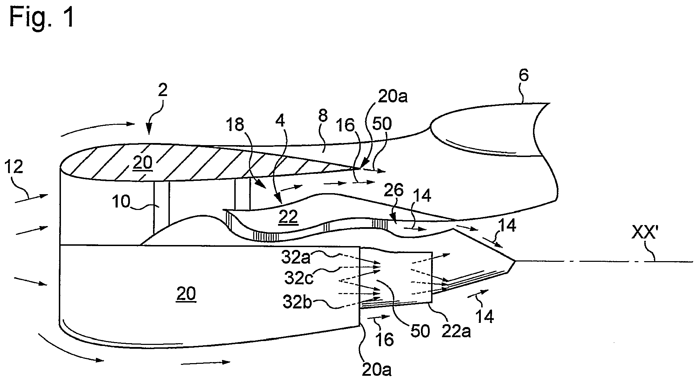

Comme représenté à la figure 1 et désigné par la référence générale notée 2, une nacelle de réacteur d'aéronef enveloppe une turbomachine 4 et est montée sous une aile 6 d'un aéronef de façon connue grâce à un mât de réacteur 8.

La turbomachine 4 comprend un générateur de gaz qui entraine une soufflante 10 montée sur l'arbre du générateur, en amont de ce dernier suivant la direction longitudinale de la nacelle de réacteur.

La nacelle présente une symétrie de révolution autour de l'axe longitudinal XX'.

Le flux d'air 12 qui entre dans la nacelle, traverse longitudinalement celle-ci, pénètre en partie dans le générateur de gaz 4 et participe à la combustion.

Le flux propulsif chaud 14 éjecté en sortie du générateur est appelé flux primaire.

La partie du flux d'air 12 entrant dans la nacelle et qui ne traverse pas le générateur de gaz est entrainée par la soufflante 10.

Ce flux propulsif froid 16, appelé flux secondaire, s'écoule dans un passage annulaire 18 agencé de façon concentrique par rapport au générateur de gaz et donc par rapport au flux primaire 14.

Ce passage 18 est formé entre une paroi longitudinale externe 20 (capot de nacelle) et une paroi longitudinale interne 22 (capot moteur) entourant le générateur de gaz.

Le flux secondaire 16 est éjecté de la nacelle à l'extrémité aval 20a de la paroi externe 20, sensiblement suivant la direction longitudinale du réacteur.

La paroi longitudinale interne 22 définissant l'enveloppe externe du générateur de gaz définit avec la partie longitudinale centrale 24 constituant le coeur du moteur un autre passage annulaire 26 par lequel s'écoule le flux primaire 14.

Ce flux est plus particulièrement éjecté à l'extrémité aval 22a de la paroi interne 22.

Un dispositif fluidique de réduction du niveau sonore du réacteur selon l'invention est appliqué à la nacelle de réacteur 2 de la figure 1.

Ce dispositif est par exemple agencé en relation avec la paroi extérieure 20 (capot extérieur) sensiblement cylindrique de la nacelle et qui entoure le passage annulaire 18 par lequel est éjecté le flux secondaire 16.

Il peut également être agencé en relation avec la paroi intérieure 22 (capot intérieur) de la nacelle qui entoure la turbomachine 4 et à l'extrémité de laquelle est éjecté le flux primaire 14.

On notera qu'un dispositif fluidique peut être prévu à l'une et/ou à l'autre des deux parois concentriques (capots extérieur et intérieur).

Plus particulièrement, le dispositif fluidique selon l'invention est associé à une extrémité dite aval 20a et/ou 22a de la paroi concernée, au niveau du bord de fuite de celle-ci (également appelé lèvre de sortie).

Le dispositif fluidique selon l'invention est apte à générer, sur commande, une perturbation de l'écoulement immédiatement en aval de l'extrémité aval de la paroi à la périphérie extérieure du flux (primaire ou secondaire) éjecté par cette extrémité.

Cette perturbation s'étend sous la forme d'un triangle fluidique qui est comparable, par ses effets aérodynamiques, à ceux produits par des chevrons solides (configuration dentelée de l'extrémité aval de la paroi).

On notera que le dispositif fluidique selon l'invention (qui est capable de produire une perturbation fluidique d'étendue sensiblement triangulaire) peut être ajouté simplement à une tuyère de nacelle de réacteur existante, sans remettre en cause toute la conception et la fabrication de cette dernière.

La perturbation fluidique d'étendue triangulaire modifie la façon dont le flux éjecté rencontre le flux extérieur (qui est l'air environnant la nacelle lorsque le flux éjecté est le flux secondaire) et interagit avec le flux éjecté afin de former des tourbillons qui se propagent longitudinalement vers l'aval.

Le phénomène précité a pour but de diminuer le bruit généré par le réacteur ainsi équipé, notamment lors des phases de décollage et d'approche de l'aéronef.

Le dispositif selon l'invention peut revêtir différentes formes de réalisation et certaines structures du dispositif vont être décrites dans ce qui suit.

Toutefois, chacune de ces structures offre l'avantage de réduire de façon efficace le bruit généré par un réacteur de grandes dimensions (par exemple, diamètre de la couronne extérieure de la nacelle de l'ordre du mètre).

Cet avantage est obtenu grâce au fait que la perturbation fluidique d'étendue triangulaire générée forme un écran fluidique (barrière fluidique) imperméable ou quasi-imperméable au flux (primaire ou secondaire) éjecté.

Pour ce faire, les moyens constitutifs du dispositif qui sont aptes à générer une perturbation fluidique d'étendue sensiblement triangulaire comportent une paire de conduits ou tubulures dits primaires disposés de façon convergente l'un par rapport à l'autre.

Ces deux conduits primaires sont aptes à éjecter chacun, sur commande, un jet de fluide primaire et les deux jets convergent l'un vers l'autre, formant ainsi les deux côtés d'un triangle qui convergent au sommet de celui-ci.

Plusieurs conduits/tubulures dits secondaires sont adjoints à la paire de conduits/tubulures primaires afin d'éjecter chacun un jet de fluide secondaire dans la perturbation d'étendue sensiblement triangulaire. Ces jets secondaires renforcent l'action de la perturbation et viennent couvrir une zone du triangle fluidique (zone intérieure) qui, en l'absence de ces jets, est insuffisamment couverte par les jets primaires convergents.

Ceci est d'autant plus vrai que le diamètre des capots de la nacelle de réacteur est grand.

L'action des jets secondaires, ajoutée à celle des jets primaires, permet ainsi d'injecter, à la périphérie du flux éjecté (primaire ou secondaire), un écoulement fluidique sous la forme d'une zone d'étendue sensiblement triangulaire qui est imperméable au flux éjecté localement.

En agençant de façon appropriée plusieurs des moyens précités à la périphérie de l'extrémité aval de la paroi concernée on est ainsi en mesure d'entourer complètement, et donc efficacement, le flux éjecté par la partie concernée du réacteur.

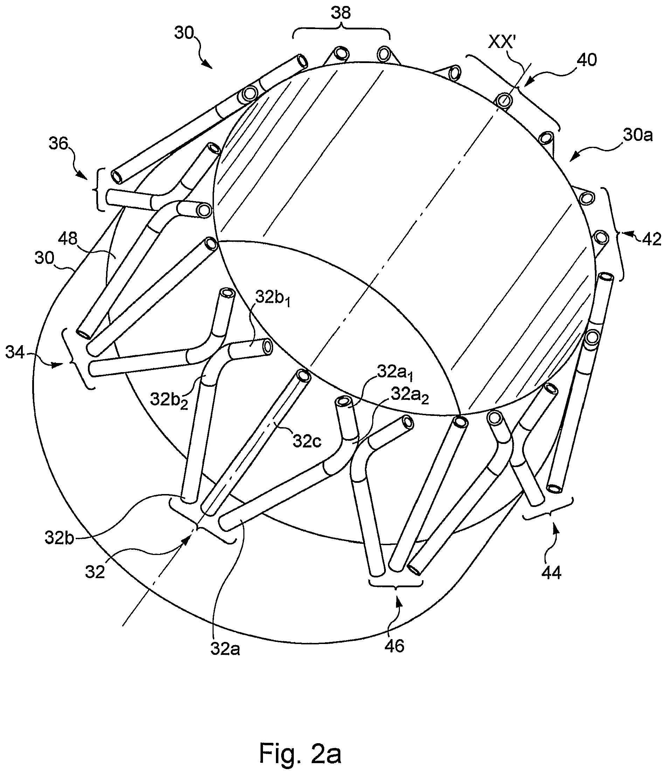

Sur la figure 2a, plusieurs dispositifs conformes à un premier mode de réalisation qui me fait pas partie de l'invention équipent l'une des deux parois de nacelles représentées à la figure 1 et qui, ici est référencée 30. La paroi représentée à la figure 2a forme une tuyère dans laquelle s'écoule un flux (primaire ou secondaire) qui est éjecté à l'extrémité aval 30a de la paroi.

Les dispositifs fluidiques 32, 34, 36, 38, 40, 42, 44, 46 sont par exemple régulièrement répartis à la périphérie extérieure de l'extrémité aval 30a de la paroi, au niveau de la couronne de sortie 48.

On notera que, dans d'autres formes de réalisation, les dispositifs peuvent être intégrés dans l'épaisseur de la paroi ou sur la face interne de celle-ci qui est en contact avec l'écoulement du flux (primaire ou secondaire) éjecté.

Il convient également de noter que les dispositifs peuvent être répartis de façon différente selon l'azimut.

Ceci permet par exemple de tenir compte de la présence du mât réacteur 8 qui modifie l'écoulement.

Cet agencement non homogène permet également de prendre en compte la directivité du bruit et les contraintes réglementaires en matière de bruit par rapport au voisinage. Il est en effet préférable de limiter le bruit rayonné vers le sol plutôt que le bruit rayonné vers le ciel.

On va maintenant décrire la constitution des dispositifs en prenant pour exemple le dispositif 32, tous les autres dispositifs étant identiques à celui-ci dans ce mode de réalisation.

Le dispositif 32 comporte deux conduits primaires 32a, 32b qui sont reliés, par exemple, via une tubulure d'amenée d'air (non représentée) à la partie haute pression du réacteur. Ainsi alimentés en air comprimé, les conduits primaires transportent chacun cet air jusqu'à leur orifice de sortie où il est éjecté sous forme d'un jet primaire.

Les conduits 32a, 32b sont configurés de manière à converger l'un vers l'autre selon un angle de convergence a1 compris entre 40 et 70° et qui est par exemple égal à 60°.

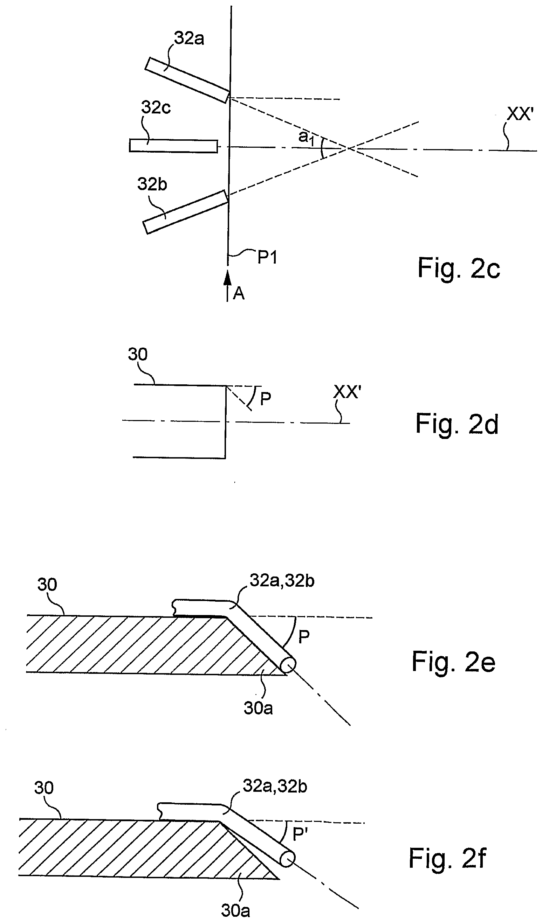

Cet angle a1 est visible sur la figure 2c qui est une vue en projection dans un plan perpendiculaire à un plan transversal P1.

L'angle a1 est un angle au sommet du triangle défini par les deux jets de fluide primaires éjectés par les conduits respectifs 32a, 32b vus de dessus sur la figure 2c.

On notera que les extrémités libres 32a1, 32b1 des conduits 32a, 32b sont droites et l'inclinaison est obtenue grâce à une portion coudée 32a2, 32b2 agencée en amont de la portion aval 32a1, 32b1 incluant l'extrémité libre (figure 2a).

Par ailleurs, les conduits primaires 32a, 32b sont également inclinés, au moins dans leur partie terminale, en direction de l'axe longitudinal XX', suivant un angle p appelé angle de pénétration.

L'angle p est représenté à la figure 2d qui est une vue suivant la direction A de la figure 2c et qui montre, en vue de côté, l'inclinaison sur l'axe XX' des conduits primaires.

Cette inclinaison est généralement obtenue grâce à la forme biseautée du bord de fuite (lèvre de sortie) de l'extrémité aval de la paroi, telle que représentée de façon agrandie à la figure 2e. L'angle p est généralement compris entre 8° (faible pénétration) et 60° (forte pénétration). Cette inclinaison permet d'augmenter la perturbation du flux éjecté en inclinant les triangles fluides sur l'axe du flux.

Ainsi, les portions terminales 32a1 et 32b1 des conduits primaires 32a, 32b, sont disposées contre la face externe inclinée du bord de fuite et adoptent la même orientation par rapport à l'axe XX' que le bord de fuite.

Toutefois, les conduits primaires peuvent alternativement adopter une orientation différente (angle p') de celle du bord de fuite comme représenté sur la figure 2f.

On notera que l'inclinaison peut d'ailleurs être supérieure à celle de l'angle p dans une autre variante de réalisation.

Selon une autre variante, les conduits primaires 32a, 32b peuvent être inclinés chacun selon un angle de pénétration différent afin que les jets primaires issus de ces conduits ne soient pas tout à fait concourants dans l'espace (on notera que ces jets sont malgré tout convergents suivant une vue analogue à celle de la figure 2a). En effet, la rencontre des deux jets parfaitement concourants en un point est susceptible de produire des émissions de bruit parasite sans améliorer le gain en basse fréquence. On notera toutefois que les angles sont sélectionnés de façon appropriée pour que les jets ainsi orientés soient suffisamment proches l'un de l'autre, afin d'éviter de créer des « trous » dans la couverture fluidique.

Ainsi, les angles sont, par exemple, sélectionnés pour que les jets soient décalés l'un de l'autre d'environ un diamètre de jet à leur point de rencontre théorique afin qu'ils ne se rencontrent pas.

En outre, le dispositif 32 comporte un troisième conduit 32c, dit secondaire, agencé entre les deux conduits primaires 32a, 32b et qui est également raccordé à une tubulure d'amenée d'air comprimé ayant la même source que les conduits 32a, 32b.

Le conduit secondaire 32c est apte à générer, sur commande, un jet secondaire à l'intérieur du triangle fluidique formé par les jets primaires convergents (figure 2c).

Plus particulièrement, le conduit secondaire 32c est aligné suivant la hauteur du triangle fluidique représenté à la figure 2c, afin d'injecter un jet supplémentaire à la périphérie du flux sortant de la couronne 48.

Ce jet additionnel contribue à rendre la zone fluidique d'étendue triangulaire quasi-imperméable au flux éjecté.

Grâce à ce jet secondaire central, les deux conduits primaires de chaque paire peuvent être écartés l'un de l'autre suivant un même diamètre situé en périphérie de l'extrémité aval 30a de sorte que la couverture fluidique d'étendue à peu près triangulaire générée pas les conduits limite la présence de « trous » ou de zones non couvertes.

Ainsi, le nombre de conduits primaires à prévoir pour couvrir toute la périphérie d'une tuyère de diamètre important de l'ordre du mètre ou de quelques mètres peut rester raisonnable.

On notera que les conduits primaires latéraux et le conduit secondaire central éjectent chacun des jets de diamètre sensiblement circulaire.

Les conduits des deux types, à savoir primaire et secondaire, peuvent avoir des diamètres identiques ou différents et des formes d'orifices de sortie différentes selon l'effet recherché et la configuration de la tuyère de sortie.

En outre, selon une variante non représentée, sur une même tuyère de sortie, le conduit secondaire peut être présent dans certains dispositifs fluidiques et être absent de certains autres dispositifs fluidiques.

Dans une telle configuration, les conduits primaires pourront être plus rapprochés l'un de l'autre dans les dispositifs ne comportant pas de conduit secondaire central afin que l'étendue triangulaire fluidique produite par les jets primaires soit la plus imperméable possible au flux éjecté.

Dans les dispositifs comportant également un conduit secondaire central, en revanche les conduits primaires pourront être davantage éloignés l'un de l'autre.

Par ailleurs, le conduit secondaire central peut adopter un angle de pénétration identique à celui des conduits primaires ou différent de celui-ci.

Un angle de pénétration différent permet d'éviter les effets d'interaction entre jets primaire et secondaire.

Sur la figure 2a, les tracés de conduits ont été représentés à titre d'exemple afin d'illustrer la convergence des conduits primaires.

Ainsi, les portions terminales ou extrémités 32a₁, 32b₁ des conduits 32a, 32b convergent l'une vers l'autre grâce aux portions coudées respectives 32a₂, 32b₂.

En amont de ces portions coudées, les conduits divergent l'un par rapport à l'autre.

Toutefois, il est envisageable que les conduits secondaires soient tous parallèles entre eux avant de rejoindre une portion coudée adaptée située en amont des extrémités 32a₁, 32b₁.

On notera que le conduit secondaire comporte une portion terminale qui est coudée par rapport au reste du conduit afin de suivre l'inclinaison du bord de fuite 30a représenté à la figure 2e.

Il convient de préciser que la vitesse de l'air comprimé circulant dans les conduits primaires et secondaires est sensiblement identique à la vitesse du flux éjecté par la tuyère (jet propulsif).

Le rapport massique entre le débit des jets d'air éjectés par les conduits et celui du flux éjecté est compris entre environ 0,2% et 2%.

Selon une variante les jets d'air peuvent être supersoniques en fonction des applications envisagées.

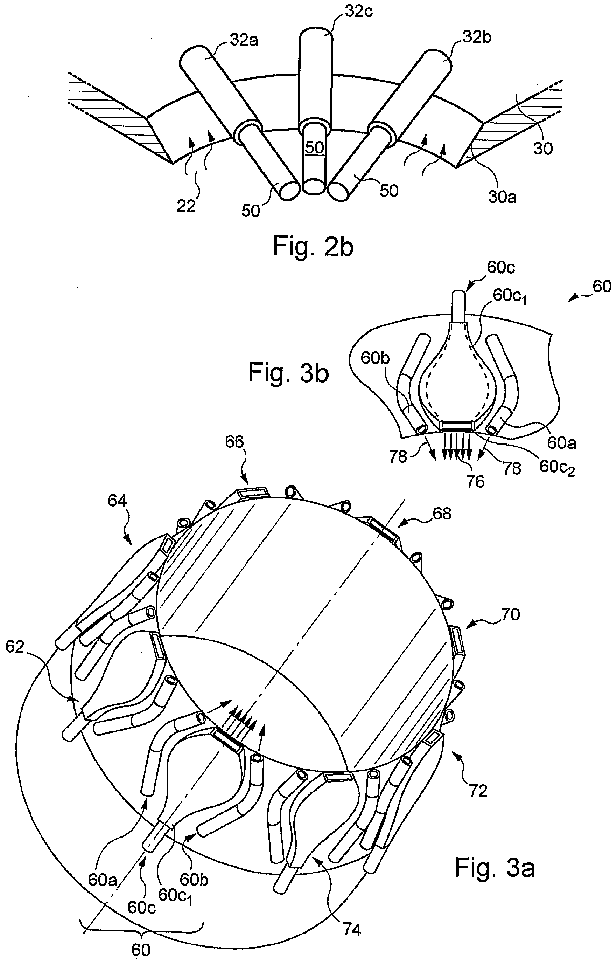

La figure 2b montre l'agencement de la partie terminale des trois conduits 32a, 32b et 32c du dispositif 32 en relation avec le bord de fuite 30a et leur inclinaison.

L'inclinaison des conduits donne aux jets 50 qui en sont issus une composante de vitesse tangentielle par rapport à la vitesse du jet propulsif. Cette composante tangentielle, du fait de l'interaction avec le jet propulsif, provoque une rotation des jets 50 sur eux-mêmes, en sens inverse pour deux jets convergents issus des conduits primaires 32a, 32b. Cette rotation peut être favorisée par des moyens tels que ceux mentionnés ci-dessus. Par ailleurs, l'angle de convergence précité amène les deux jets convergents à se rencontrer à courte distance, distance comprise entre 0,2 et 0,5 fois le diamètre de sortie de la tuyère.

Lorsque la réalisation concerne la couronne séparant le jet extérieur froid (flux secondaire) et le jet central chaud (flux primaire), la rotation des jets 50 entraine de l'air froid extérieur 52 à l'intérieur du jet propulsif entre les jets convergents, de l'air chaud 54 ressortant au contraire à l'extérieur des jets 50.

Il en résulte une homogénéisation des températures dès la sortie de la tuyère, pouvant contribuer à la réduction du bruit généré par cette tuyère. Il se produit également un effet d'écran thermique, également favorable à la réduction du bruit rayonné.

Dans l'exemple illustré sur la figure 2a, les paires de conduits primaires sont réparties de sorte que le conduit convergeant dans un sens, juxtapose directement le conduit de la paire adjacente et qui présente une convergence opposée.

Cependant, l'écartement entre les tubes d'une même paire, ainsi que l'écartement des tubes adjacents de deux paires différentes sera fonction du nombre de tubes devant équiper la tuyère et du diamètre de cette dernière. En effet, dans l'exemple illustré, la tuyère comporte huit paires (32,..., 46) de tubulures. Il est bien entendu évident qu'il s'agit ici d'un exemple de réalisation donné à titre d'illustration, le nombre de paires de tubulures pouvant être inférieur ou supérieur à ce nombre. Le nombre de paires de tubulures adjointes à la tuyère sera notamment fonction de la taille du réacteur, mais également de la nuisance sonore des réacteurs.

Ainsi, afin de réduire le bruit lié aux jets propulsifs des réacteurs au moment de la phase de décollage ou de la phase d'approche de l'avion, on déclenche un soufflage d'air comprimé au travers des amenées d'air jusqu'aux conduits répartis au niveau de la couronne de sortie de ladite tuyère. La couronne concernée peut être soit celle (couronne intérieure) séparant le flux chaud (flux primaire) et le flux froid (flux secondaire), soit celle séparant le flux froid (flux secondaire) et l'air ambiant (couronne de nacelle). De par le positionnement des conduits au niveau de la couronne de sortie, ainsi que leur répartition, les jets d'air comprimés sont propulsés hors des conduits selon les incidences de convergence et de pénétration, perturbant alors le jet propulsif selon des triangles d'interaction fluide dans le sens de l'écoulement.

Les jets d'air primaires et secondaires constituent des jets contrôlés. Reliés à la partie haute pression du réacteur, leur alimentation est rendue effective uniquement dans les phases où le contrôle est nécessaire (généralement lors des phases de décollage et d'atterrissage). En dehors de ces phases, les dispositifs fluidiques selon l'invention sont rendus inactifs par simple coupure de l'amenée d'air comprimé. L'aéronef ainsi équipé, ne présente aucune pénalisation en terme de traînée ou de perte de poussée.

On notera que les jets primaires et secondaires peuvent être activés indépendamment les uns des autres, offrant ainsi un système de perturbation du flux éjecté particulièrement flexible. Ainsi, il peut être envisagé une activation partielle desdits jets : actionnement des jets positionnés sur le haut, le bas, la droite ou la gauche de ladite tuyère de la figure 2a, modifiant ainsi la directivité des émissions sonores.

Selon une autre variante, les jets de contrôle peuvent être actionnés de façon instationnaire afin de réduire les débits des jets de contrôle ou d'améliorer les performances du contrôle.

La figure 3a illustre l'agencement régulier de plusieurs dispositifs fluidiques selon un deuxième mode de réalisation qui ne fait pas partie de l'invention à la périphérie de l'extrémité aval 30a de la paroi 30 représentée à la figure 2a.

Les dispositifs fluidiques 60, 62, 64, 66, 68, 70, 72, 74 sont tous identiques dans cet exemple et seul l'un d'entre eux va maintenant être décrit.

Le dispositif 60 comprend deux conduits primaires convergents 60a et 60b identiques structurellement et fonctionnellement à ceux 32a et 32b du dispositif 32 des figures 2a à 2f.

Par ailleurs, le dispositif 60 comprend un conduit secondaire central 60c disposé entre les deux conduits primaires 60a, 60b et qui est relié à la même source d'air comprimé que ces derniers. Ce conduit 60c peut générer, sur commande, un jet secondaire central dirigé vers l'intérieur de la perturbation fluidique d'étendue triangulaire produite par les deux jets primaires issus des conduits 62a, 62b. Le jet secondaire central est plus particulièrement dirigé suivant la hauteur du triangle fluidique.

Ce conduit secondaire 60c comporte, dans sa partie terminale, une forme élargie (à la manière d'un soufflet de forge) 60c1 qui présente un orifice de sortie 60c2 non circulaire, contrairement à celui du conduit secondaire 32c sur les figures 2a et 2b.

On notera toutefois que cette forme divergente/convergente n'est pas obligatoire. La forme de la partie terminale du conduit en amont de l'orifice peut en effet être différente. Les parois de cette partie terminale en amont de l'orifice peuvent par exemple être parallèles entre elles.

L'orifice de sortie 60c2 (fente) possède, en section transversale, une forme plus large que haute, la hauteur étant prise suivant une direction radiale par rapport à l'axe longitudinal XX' et la largeur correspondant à une extension (latérale) suivant une tangente au contour circulaire de l'extrémité aval 30a.

L'orifice de sortie 60c2 a une forme générale par exemple rectangulaire de hauteur inférieure au diamètre de l'orifice de sortie des conduits primaires.

Le conduit central confère ainsi un encombrement réduit en hauteur.

La forme aplatie de l'orifice de sortie du conduit central permet de générer, sur commande, un jet secondaire central en forme de nappe fluidique.

Les nappes fluidiques peuvent également contribuer à un mélange thermique lorsqu'elles sont situées sur le capot moteur en modifiant le mélange entre les gaz chauds du flux moteur (flux primaire) et les gaz froids du flux secondaire. Les nappes fluidiques ainsi générées contribuent à réduire le bruit provenant d'une autre source de bruit, à savoir les gradients thermiques.

Ce jet supplémentaire sensiblement plan vient renforcer le triangle fluide généré par les jets primaires.

Avec un tel jet secondaire (référencé 76 sur la figure 3b), les conduits primaires 60a et 60b peuvent être plus écartés l'un de l'autre que les conduits primaires 32a et 32b des figures 2a à 2e car ce jet possède une extension latérale supérieure à celle des jets primaires 78.

Il est donc plus couvrant que le jet secondaire 50 de la figure 2b.

A titre d'exemple, la section transversale de l'orifice de sortie a une hauteur ou épaisseur inférieure à la moitié du diamètre de l'orifice de sortie des conduits primaires et une largeur ou un allongement d'environ 10 à 20 fois ce diamètre.

Plus particulièrement, la hauteur peut être environ égale à un tiers du diamètre de l'orifice de sortie.

L'adjonction d'un conduit secondaire central 60c dans chaque dispositif fluidique ou dans certains d'entre eux seulement équipant une même tuyère, permet de réduire le nombre de conduits primaires utilisés.

Le débit de fluide véhiculé par un tel conduit secondaire central est sensiblement équivalent à celui véhiculé par plusieurs conduits primaires, par exemple, deux ou trois conduits primaires.

On notera que le conduit secondaire 60c peut être incliné sur l'axe longitudinal XX' avec le même angle de pénétration que celui des deux conduits primaires (ou de l'un deux seulement si les deux conduits primaires ont des angles différents), en suivant par exemple l'inclinaison du bord de fuite de l'extrémité aval 30a.

Alternativement, l'inclinaison du conduit secondaire peut différer de celle(s) des conduits primaires, par exemple, afin de d'éviter que les différents jets issus des conduits respectifs ne soient concourants et ne génèrent un éventuel bruit parasite.

Alternativement, les jets primaires peuvent ne pas être activés, le jet secondaire de forme aplatie agissant alors seul.

Selon une variante, l'orifice de sortie du jet secondaire peut être profilé de façon à donner au jet secondaire une inclinaison naturelle différente de l'inclinaison du bord de fuite du capot.

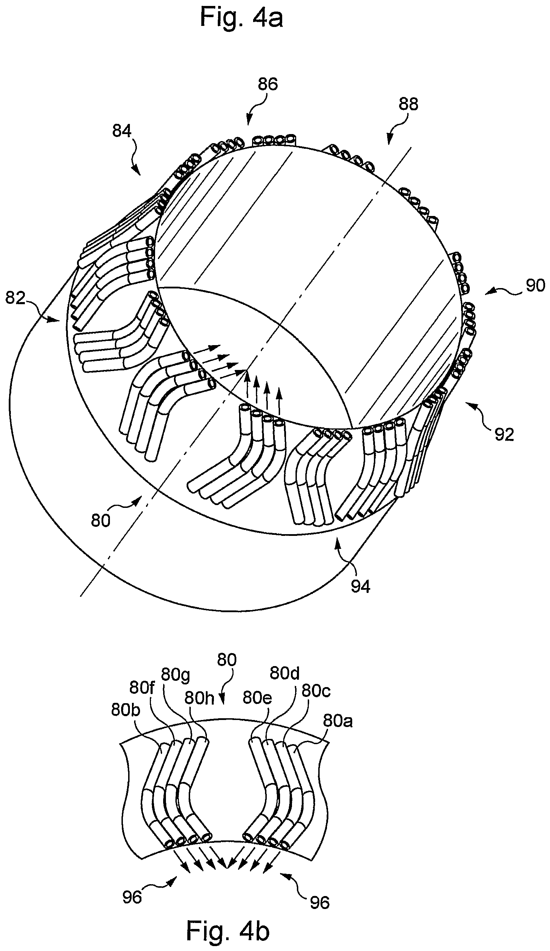

La figure 4a illustre l'agencement régulier de plusieurs dispositifs fluidiques selon l'invention et qui sont situés à la périphérie de l'extrémité aval 30a de la paroi représentée à la figure 2a.

Les dispositifs fluidiques 80, 82, 84, 86, 88, 90,92, 94 sont tous identiques dans cet exemple et seul l'un d'entre eux va maintenant être décrit.

Le dispositif 80 (figures 4a et 4b) comprend deux conduits primaires convergents 80a et 80b identiques structurellement et fonctionnellement à ceux 32a et 32b du dispositif 32 des figures 2a à 2f.

Par ailleurs, le dispositif 80 comprend, associés à la paire de conduits primaires 80a, 80b, plusieurs conduits secondaires ayant la même orientation que les conduits primaires dans le plan de la figure 2c.

Plus particulièrement, parmi cette pluralité de conduits secondaires un premier groupe de conduits (80c, 80d, 80e sur la figure 4b) est associé au conduit primaire 80a et un second groupe (80f, 80g, 80h) est associé au conduit primaire 80b.

Chaque groupe de conduits secondaires est orienté comme le conduit primaire auquel ils sont associés et ces conduits parallèles sont agencés côte à côte, accolés ou non.

Les jets secondaires issus de ces conduits secondaires sont donc parallèles et suffisamment proches les uns des autres pour former, avec le jet primaire associé, un faisceau de jets quasi-jointifs (faisceau 96 sur la figure 4b) qui balayent la totalité du triangle fluidique défini par les deux jets primaires convergents. Les jets secondaires couvrent plus particulièrement la zone intérieure du triangle.

Les conduits secondaires sont donc prévus par paire, chaque paire ayant un conduit dans l'un des groupes et l'autre conduit dans l'autre groupe.

Les deux conduits secondaires d'une même paire sont disposés de façon symétrique l'un de l'autre dans le plan de la figure 2c.

Ainsi, les paires de conduits secondaires sont les suivantes : 80c et 80f, 80d et 80g, 80k et 80h.

On notera que les conduits secondaires possèdent, par exemple, le même angle de pénétration que celui des conduits primaires.

Les orifices de sortie ou d'éjection des conduits secondaires ont un diamètre par exemple identique à celui des conduits primaires.

À titre de variante, la taille des orifices, donc des conduits (et des jets) peut toutefois varier : les conduits secondaires les plus éloignés des conduits primaires ont un diamètre plus faible que ceux qui en sont proches.

De façon générale, le diamètre des conduits secondaires diminue au fur et à mesure que les conduits se rapprochent de la hauteur du triangle fluide (la distance à l'axe du triangle diminue).

On notera que, selon une variante, les angles de pénétration des conduits 80a à 80h peuvent varier.

Les angles de pénétration des deux conduits d'une même paire (conduits primaires et secondaires) peuvent être différents l'un de l'autre de telle façon que les trajectoires des jets de fluide issus de ces conduits ne se croisent pas. De cette façon, les effets de couplage parasites obtenus par la rencontre des deux jets d'une même paire sont évités. Les angles sont sélectionnés de façon adaptée pour que les jets ainsi déviés soient suffisamment proches l'un de l'autre, afin d'éviter de créer des « trous » dans l'écran fluidique formé par l'ensemble de ces conduits.

On peut ainsi faire varier les angles de pénétration des conduits au sein d'une même paire et ce, pour plusieurs paires, voire pour toutes les paires.

Alternativement, on peut conserver le même angle de pénétration à l'intérieur d'une même paire et faire varier les angles d'une paire à l'autre.

Ainsi, par exemple, l'angle de pénétration peut diminuer en se déplaçant de la paire de conduits primaires 80a, 80b à la paire de conduits secondaires la plus éloignée 80c, 80h ou, au contraire, augmenter.

Ces variantes d'angles de pénétration permettent d'éviter des effets parasites entre différents jets.

Selon une variante non représentée, un conduit central produisant un jet central peut être inséré entre les faisceaux de conduits des figures 4a et 4b.

Le conduit central peut être analogue à celui des figures 2a à 2f ou être un conduit central produisant un jet plan tel que celui des figures 4a et 4b.

On notera que les conduits ou tubulures primaires et secondaires peuvent être intégrés dans l'épaisseur de la paroi (capot) de la nacelle et donc adopter des angles différents de ceux de la paroi.

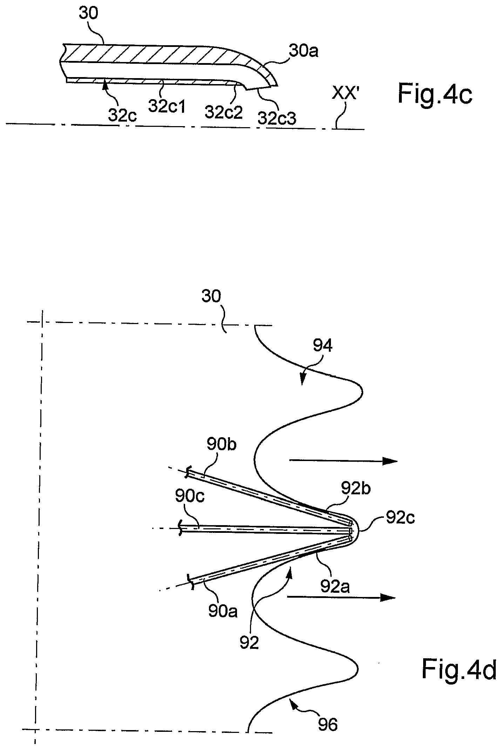

Ainsi, la figure 4c illustre une variante dans laquelle on a représenté en vue de profil un seul conduit conforme à l'invention et qui est aménagé à l'intérieur de la paroi 30 le long de la direction d'extension (longitudinale) de la paroi.

Ce conduit est par exemple l'un des conduits secondaires de la figure 2a, tel que le conduit 32c.

Ce conduit 32c comprend une portion rectiligne 32c₁ et une portion de conduit 32c₂ formant un coude par rapport à la portion rectiligne afin de donner à l'orifice de sortie 32c₃ du conduit l'orientation souhaitée (angle de pénétration et éventuellement angle de dérapage).

Le coude est suffisamment court pour que l'orifice de sortie débouche au ras de la paroi ou à faible proximité de celle-ci.

La portion de conduit formant le coude peut présenter une courbe continue et, par exemple, être réalisée par cintrage.

Alternativement, la portion formant le coude peut être formée par une portion droite de conduit raccordée à la portion rectiligne suivant un angle de raccord.

La description de la figure 4c qui précède s'applique à chacun des conduits primaires et secondaires représentés sur l'une des figures précédentes.

On notera en outre que l'implantation dans la paroi des conduits permet de ne pas augmenter l'encombrement et de ne pas pénaliser les performances aérodynamiques.

On a représenté de façon très schématique sur la figure 4d l'agencement de deux conduits primaires 90a, 90b et d'un conduit secondaire central 90c en relation avec un chevron 92 aménagé à l'extrémité aval de la paroi 30 de la nacelle afin notamment d'amplifier les effets produits par le chevron.

L'extrémité aval comprend une pluralité de chevrons successifs dont seuls trois sont représentés 92, 94, 96 et chaque chevron peut être équipé d'un dispositif fluidique comprenant les trois conduits 90a, 90b, 90c.

Dans ce mode de réalisation les deux conduits primaires 90a, 90b sont disposés respectivement le long des portions inclinées 92a, 92b du chevron (ces portions inclinées relient le sommet du chevron à un creux situé entre deux chevrons adjacents) avec leur orifice de sortie tourné vers le sommet 92c du chevron. Le conduit secondaire 90c est disposé le long de la médiane du chevron qui passe par le sommet de ce dernier avec l'orifice de sortie orienté vers ce sommet.

On notera que d'autres agencements des conduits primaires et secondaires sont envisageables en relation avec les chevrons.

Par exemple, les trois orifices de sortie des trois conduits pourraient être dirigés sur un creux entre deux chevrons en remplacement ou en plus de l'agencement de la figure 4d.

On notera que les différents agencements des figures 3a, 3b et 4a, 4b peuvent également être associés à des chevrons pour coopérer avec ces derniers comme le permet l'agencement des figures 2a et 2b.

## Revendications

1. Réacteur d'aéronef, comprenant une paroi (30) centrée autour d'un axe longitudinal (XX') et entourant un flux de gaz qui est éjecté à une extrémité aval de la paroi dans la direction de l'axe, plusieurs paires de conduits dits primaires (80a, 80b) répartis à la périphérie de l'extrémité aval de la paroi étant aptes à éjecter sur commande chacun un jet de fluide primaire destiné à interagir avec le flux de gaz éjecté, les conduits primaires (80a, 80b) de chaque paire convergeant l'un vers l'autre à proximité de l'extrémité aval de la paroi de manière à ce que les jets primaires éjectés forment les deux côtés d'un triangle qui se rejoignent au sommet de ce dernier suivant une vue en projection dans un plan perpendiculaire à un plan transversal (P1), ledit plan transversal étant perpendiculaire à l'axe longitudinal (XX'), une pluralité de paires de conduits dit secondaires (80c, 80d, 80e et 80f, 80g, 80h) étant associée à chaque paire de conduits primaires, chaque conduit secondaire étant apte à éjecter sur commande un jet de fluide secondaire dirigé, selon ladite vue en projection, dans le triangle formé par les jets primaires, les conduits secondaires d'une même paire étant disposés de façon symétrique l'un de l'autre par rapport à ladite hauteur du triangle, selon ladite vue en projection, et chaque conduit primaire (80a et 80b) étant associé à l'un des conduits secondaires de chacune des paires, **caractérisé en ce que** les conduits secondaires associés à un même conduit primaire sont disposés côte à côte et orientés parallèlement au conduit primaire associé.

2. Réacteur selon la revendication 1, **caractérisé en ce que** ladite paroi (30) présente un diamètre de sortie à son extrémité aval et les conduits primaires (80a, 80b) de chaque paire convergent l'un vers l'autre à proximité de l'extrémité aval de la paroi de manière à ce que les jets primaires éjectés se rencontrent à courte distance, distance comprise entre 0,2 et 0,5 fois le diamètre de sortie.

3. Réacteur selon l'une des revendications 1 à 2, **caractérisé en ce que** les conduits primaires convergent l'un vers l'autre suivant un angle de convergence (a1) compris entre 40 et 70° suivant une vue en projection dans un plan perpendiculaire au plan transversal (P1).

4. Réacteur selon l'une des revendications 1 à 3, **caractérisé en ce que** les conduits sont inclinés en direction de l'axe longitudinal suivant un angle de pénétration (P) compris entre 8 et 60°.

5. Réacteur selon la revendication 4, **caractérisé en ce que** les inclinaisons en direction de l'axe longitudinal des conduits primaires (80a, 80b) et/ou secondaires (80c, 80d, 80e, 80f, 80g, 80h) associés varient entre les conduits.

6. Réacteur d'aéronef selon l'une des revendications 1 à 5, **caractérisé en ce que** les conduits primaires (80a, 80b) et/ou secondaires (80c, 80d, 80e, 80f, 80g, 80h) associés sont intégrés dans la paroi.

7. Aéronef comprenant au moins un réacteur selon l'une des revendications 1 à 6.

## Patentansprüche

1. Flugzeugtriebwerk, umfassend eine Wand (30), die um eine Längsachse (XX') zentriert ist und einen Gasstrom umgibt, der an einem stromabwärtigen Ende der Wand in der Richtung der Achse ausgestoßen wird, mehrere Paare von sogenannten Primärleitungen (80a, 80b), die auf dem Umfang des stromabwärtigen Endes der Wand verteilt sind, die geeignet sind, auf Befehl jeweils einen Primärfluidstrahl auszustoßen, der dazu bestimmt ist, mit dem ausgestoßenen Gasstrom zu interagieren, wobei die Primärleitungen (80a, 80b) von jedem Paar in der Nähe des stromabwärtigen Endes der Wand derart zueinander konvergieren, dass die ausgestoßenen Primärstrahlen die zwei Seiten eines Dreiecks bilden, die sich nach einer Projektionsansicht in einer Ebene, die senkrecht zu einer Querebene (P1) ist, an der Spitze dieses Letzteren treffen, wobei die Querebene senkrecht zu der Längsachse (XX') ist, wobei mehrere Paare von sogenannten Sekundärleitungen (80c, 80d, 80e und 80f, 80g, 80h) jedem Paar von Primärleitungen zugeordnet sind, wobei jede Sekundärleitung auf Befehl geeignet ist, einen Sekundärfluidstrahl auszustoßen, der nach der Projektionsansicht in das Dreieck, das durch die Primärstrahlen gebildet ist, gerichtet ist, wobei die Sekundärleitungen eines gleichen Paares in Bezug auf die Höhe des Dreiecks nach der Projektionsansicht zueinander symmetrisch angeordnet sind, und wobei jede Primärleitung (80a und 80b) einer der Sekundärleitungen von jedem der Paare zugeordnet ist, **dadurch gekennzeichnet, dass** die Sekundärleitungen, die einer gleichen Primärleitung zugeordnet sind, nebeneinander angeordnet und parallel zu der zugeordneten Primärleitung ausgerichtet sind.

2. Triebwerk nach Anspruch 1, **dadurch gekennzeichnet, dass** die Wand (30) einen Austrittsdurchmesser an ihrem stromabwärtigen Ende aufweist und die Primärleitungen (80a, 80b) von jedem Paar in der Nähe des stromabwärtigen Endes der Wand derart zueinander konvergieren, dass sich die ausgestoßenen Primärstrahlen mit kurzem Abstand treffen, wobei der Abstand zwischen dem 0,2- und dem 0,5-Fachen des Austrittsdurchmessers beträgt.

3. Triebwerk nach einem der Ansprüche 1 bis 2, **dadurch gekennzeichnet, dass** die Primärleitungen nach einem Konvergenzwinkel (a1), der zwischen 40 und 70° beträgt, nach einer Projektionsansicht in einer Ebene, die senkrecht zu einer Querebene (P1) ist, zueinander konvergieren.

4. Triebwerk nach einem der Ansprüche 1 bis 3, **dadurch gekennzeichnet, dass** die Leitungen in Richtung der Längsachse nach einem Durchdringungswinkel (P), der zwischen 8 und 60° beträgt, geneigt sind.

5. Triebwerk nach Anspruch 4, **dadurch gekennzeichnet, dass** die Neigungen in Richtung der Längsachse der Primärleitungen (80a, 80b) und/oder Sekundärleitungen (80c, 80d, 80e, 80f, 80g, 80h), die zugeordnet sind, zwischen den Leitungen variieren.

6. Flugzeugtriebwerk nach einem der Ansprüche 1 bis 5, **dadurch gekennzeichnet, dass** die Primärleitungen (80a, 80b) und/oder Sekundärleitungen (80c, 80d, 80e, 80f, 80g, 80h), die zugeordnet sind, in der Wand integriert sind.

7. Flugzeug, umfassend mindestens einen Reaktor nach einem der Ansprüche 1 bis 6.

## Claims

1. Aircraft jet engine, comprising a wall (30) centred about a longitudinal axis (XX') and surrounding a gas stream which is ejected at a downstream end of the wall in the direction of the axis, a plurality of pairs of ducts termed primary ducts (80a, 80b) distributed at the periphery of the downstream end of the wall each being able to eject on command a primary fluid jet intended to interact with the ejected gas stream, the primary ducts (80a, 80b) of each pair converging towards one another in the vicinity of the downstream end of the wall in such a way that the ejected primary jets form the two sides of a triangle which meet at the vertex thereof when viewed in projection in a plane perpendicular to a transverse plane (P1), said transverse plane being perpendicular to the longitudinal axis (XX'), a plurality of pairs of ducts termed secondary ducts (80c, 80d, 80e and 80f, 80g, 80h) being associated with each pair of primary ducts, each secondary duct being able to eject on command a secondary fluid jet directed, in said projection view, into the triangle formed by the primary jets, the secondary ducts of one and the same pair being arranged symmetrically to one another with respect to said height of the triangle, in said projection view, and each primary duct (80a and 80b) being associated with one of the secondary ducts of each of the pairs, **characterized in that** the secondary ducts associated with one and the same primary duct are arranged side by side and oriented parallel to the associated primary duct.

2. Jet engine according to claim 1, **characterized in that** said wall (30) has an outlet diameter at its downstream end and the primary ducts (80a, 80b) of each pair converge towards one another in the vicinity of the downstream end of the wall in such a way that the ejected primary jets meet at a short distance, the distance being between 0.2 and 0.5 times the outlet diameter.

3. Jet engine according to either of claims 1 and 2, **characterized in that** the primary ducts converge towards one another at a convergence angle (a1) between 40 and 70° when viewed in projection in a plane perpendicular to the transverse plane (P1).

4. Jet engine according to one of claims 1 to 3, **characterized in that** the ducts are inclined in the direction of the longitudinal axis at a penetration angle (P) between 8 and 60°.

5. Jet engine according to claim 4, **characterized in that** the inclinations of the associated primary ducts (80a, 80b) and/or secondary ducts (80c, 80d, 80e, 80f, 80g, 80h) in the direction of the longitudinal axis vary between the ducts.

6. Aircraft jet engine according to one of claims 1 to 5, **characterized in that** the associated primary ducts (80a, 80b) and/or secondary ducts (80c, 80d, 80e, 80f, 80g, 80h) are integrated into the wall.

7. Aircraft comprising at least one jet engine according to one of claims 1 to 6.
